# EUROPÄISCHE PATENTSCHRIFT

(11) **EP 1 599 365 B1**
(45) Veröffentlichungstag und Bekanntmachung des Hinweises auf die Patenterteilung: **03.12.2008**
(21) Anmeldenummer: 03770898.9
(22) Anmeldetag: 06.10.2003
(51) Int. Cl.: B60R 21/01

(54) **VERFAHREN ZUR BILDUNG EINER AUSL ÖSEENTSCHEIDUNG FÜR EIN RÜ CKHALTESYSTEM**
METHOD FOR GENERATING A FIRING DECISION FOR A RESTRAINING SYSTEM
PROCEDE POUR ELABORER UNE DECISION DE DECLENCHEMENT D'UN SYSTEME DE RETENUE

(30) Priorität: 28.01.2003 DE 10303149
(43) Veröffentlichungstag der Anmeldung: 30.11.2005
(73) Patentinhaber: ROBERT BOSCH GMBH, 70442 Stuttgart (DE)
(72) Erfinder: KROENINGER, Mario, 77815 Buehl (DE); SCHMID, Michael, 70806 Kornwestheim (DE); LAHMANN, Robert, 70174 Stuttgart (DE)
(86) Internationale Anmeldenummer: PCT/DE2003/003303
(87) Internationale Veröffentlichungsnummer: WO 2004/069603

(56) Entgegenhaltungen:
- EP-A- 1 219 500
- EP-A- 1 258 399
- WO-A-99/47384
- DE-A- 10 149 112
- GB-A- 2 367 043
- US-B1- 6 192 305
- US-B1- 6 438 463

## Beschreibung

### Stand der Technik

Die Erfindung geht aus von einem Verfahren zur Bildung einer Auslöseentscheidung für ein Rückhaltesystem nach der Gattung des unabhängigen Patentanspruchs.

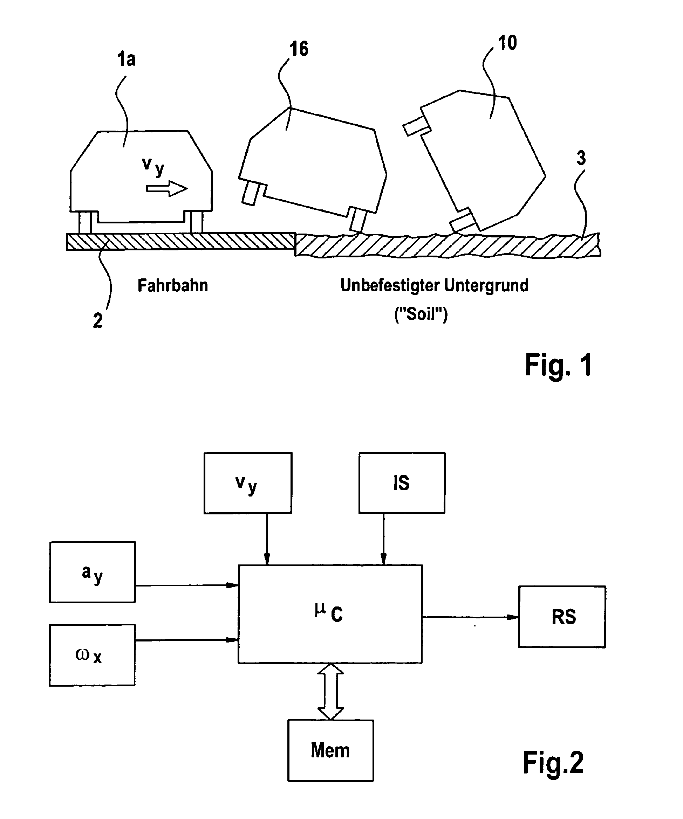

Aus der nicht vorveröffentlichten Anmeldung der Anmelderin DE 101 49 112 geht bereits ein Verfahren zur Bildung einer Auslöseentscheidung für ein Rückhaltesystem, insbesondere für Soil Trips, hervor. Unter Soil Trips versteht man Situationen, in denen das Fahrzeug nach einem Schleudervorgang seitlich rutscht und dann auf einem Untergrund mit einem hohen Reibungskoeffizienten gerät, zum Beispiel ein unbefestigter Untergrund neben einer Fahrbahn. Rutscht das Fahrzeug dann beispielsweise nach rechts, wie in Figur 1 dargestellt, und zwar das Fahrzeug 1a auf der Fahrbahn 2, so werden die Reifen auf der rechten Seite zum Punkt 1b eine starke Verzögerung erfahren, die dann ein Drehmoment des Fahrzeugs auf dem unbefestigten Untergrund 3 induziert. Zum Zeitpunkt 1c befindet sich das Fahrzeug bereits voll im Überrollvorgang. In DE 10149 112 wird die Auslöseentscheidung in Abhängigkeit von Fahrdynamikdaten bestimmt, wobei als die Fahrdynamikdaten ein Schwimmwinkel in Verbindung mit einer Fahrzeugquergeschwindigkeit und einer Fahrzeugkippbewegung verwendet werden. Durch entsprechende Schwellwertvergleiche wird die Auslöseentscheidung dann gebildet.

Aus WO 99/47384 A1 ist es bekannt, in Abhängigkeit von der Drehrate um die Fahrzeuglängsachse, einer Fahrzeuggeschwindigkeit und einer Fahrzeugquerbeschleunigung die Auslöseentscheidung bei einem Soil-Trip-Rollover zu bilden. Die Fahrzeugquerbeschleunigung wird dabei mit einem festem Schwellwert verglichen. Nur wenn dieser feste Schwellwert überschritten wird, kann es zu einer Auslöseentscheidung kommen.

Aus EP 1 219 500 A2 ist es bekannt, einen Schwellwert für das Wertepaar aus der Fahrzeugquerbeschleunigung und der Überrollrate in Abhängigkeit von der Fahrzeugeigengeschwindigkeit zu verändern. Es kann auch vorgesehen sein, dass der Schwellwert in Abhängigkeit von der Änderung der Fahrzeugquerbeschleunigung erfolgen kann.

### Vorteile der Erfindung

Das erfmdungsgemäße Verfahren zur Bildung einer Auslöseentscheidung für ein Rückhaltesystem mit den Merkmalen des unabhängigen Patentanspruchs hat demgegenüber den Vorteil, dass eine frühere Auslösung im Falle von Soil Trips ermöglicht wird. Dies hängt daran, dass nicht nur die Fahrzeugquerbeschleunigung mit der Drehrate verknüpft wird, sondern auch die Fahrzeugquerbeschleunigung zusätzlich mit einem Schwellwert verglichen wird, der in Abhängigkeit von wenigstens einer Komponente der Fahrzeugschwerpunktsgeschwindigkeit eingestellt wird. Durch die Anpassung des Schwellwerts wird eine bessere Adaption an das Unfallverhalten erreicht. Die Anpassung kann laufend oder in längeren Zeitabständen erfolgen. Diese Schwellwertentscheidung ist dahingehend zu verstehen, dass ein Wertepaar aus Fahrzeugquerbeschleunigung und vorzugsweise der Fahrzeugquergeschwindigkeit mit einer Kennlinie verglichen werden. Es können jedoch auch andere Komponenten der Fahrzeugschwerpunktsgeschwindigkeit verwendet werden, um eine Schätzung für die laterale Fahrzeuggeschwindigkeit zu erhalten. Selbst die Fahrzeuglängsgeschwindigkeit kann hier verwendet werden, da beispielsweise bei einem Schleudervorgang die Schwerpunktsgeschwindigkeit in der ersten Phase des Schleuderns ungefähr konstant bleibt, jedoch vor einer Längsgeschwindigkeit in eine Quergeschwindigkeit umgewandelt wird. Es werden also Signale verwendet, die durch eine kinematische Sensorik ermittelt werden. Im folgenden wird die Erfindung anhand der Fahrzeugquergeschwindigkeit erläutert.

Untersuchungen von Soil Trip-Fahrzeugstests haben gezeigt, dass die Fahrzeugquergeschwindigkeit einen entscheidenden Einfluss auf die maximal erreichten Rollwinkel und somit auf das Überrollverhalten eines Fahrzeugs hat. Es ist in jedem Fall von Vorteil, für die Bildung einer Auslöseentscheidung die Signale eines Drehratensensors für Drehungen um die Längsachse des Fahrzeugs zu erfassen und mit denen eines Beschleunigungssensors in Fahrzeugquerrichtung zu verknüpfen. Dies führt zu einer höheren Sicherheit bei einer früheren Auslösemöglichkeit. Die Fahrzeugquerbeschleunigung eignet sich, da, wie oben dargestellt, bei einem Soil Trip an den Reifen eine laterale Abbremsung erfolgt und den Überrollvorgang initiiert.

Es ist weiterhin möglich, sowohl die Fahrzeugquergeschwindigkeit, als auch die Fahrzeugquerbeschleunigung, als auch die Drehrate um die Fahrzeuglängsachse zu verwenden, um damit ein hohes Maß an Sicherheit für die Auslöseentscheidung bei einer gleichzeitig sehr frühen Auslöseentscheidung zu ermöglichen.

Durch die in den abhängigen Ansprüchen aufgeführten Maßnahmen und Weiterbildungen sind vorteilhafte Verbesserungen des im unabhängigen Patentanspruch angegebenen Verfahrens zur Bildung einer Auslöseentscheidung für ein Rückhaltesystem möglich.

Besonders vorteilhaft ist, dass die Verknüpfung der Fahrzeugquergeschwindigkeit der Fahrzeugquerbeschleunigung und gegebenenfalls der Drehrate um die Fahrzeuglängsachse derart durchgeführt wird, dass die Fahrzeugquerbeschleunigung und die Drehrate mit Wertepaaren zur Bildung der Auslöseentscheidung verglichen werden. Diese Wertepaare werden in Abhängigkeit von der Fahrzeugquergeschwindigkeit als einem Parameter gebildet. Dabei kann nun vorteilhafter Weise vorgesehen sein, dass für Wertepaare in Abhängigkeit von der Fahrzeugquergeschwindigkeit, beispielsweise als Kennlinie, bereits im Fahrzeug in einer geeigneten Speichereinheit abgespeichert sind und dann zum Vergleich geladen werden können. Wird eine Fahrzeugquergeschwindigkeit mittels der Fahrdynamikdaten bestimmt, die außerhalb·des von der Kennlinie im Speicher abgedeckten Bereichs liegt, kann dies durch eine geeignete Extrapolation der vorhandenen Kennlinien kompensiert werden.

Die Kennlinie kann kontinuierlich vorliegen, sie kann aber auch als ein Set von Wertepaaren vorliegen, zwischen denen dann im Bedarfsfall interpoliert wird, wobei der Begriff Set als der allgemeinere Begriff angesehen wird. Für die Fahrzeugquergeschwindigkeit ist vorteilhafter Weise vorgesehen, diese mit einer vorgegebenen Schwelle zu vergleichen, die vom gewählten Fahrzeugtyp abhängt und bei deren Überschreiten es erst zu einem Überrollvorgang kommen kann. Liegt die Fahrzeugquergeschwindigkeit unter dieser Schwelle, ist die Auslöseentscheidung immer negativ, d.h. es findet keine Auslösung statt.

Das Set von Wertepaaren wird vorteilhafter Weise in Abhängigkeit von der Genauigkeit der Schätzung für die Fahrzeugquergeschwindigkeit beeinflusst. D.h., hat die Geschwindigkeitsschätzung eine Ungenauigkeit von 10km/h, dann ist es für eine sichere Schätzung und Weiterverarbeitung zur Bildung der Auslöseentscheidung notwendig, die untere Grenze eines Vertrauensintervalls um die Geschwindigkeitsschätzung zu wählen, um eine Fehlauslösung oder zu frühe Auslösung zu vermeiden. Eine weitere Möglichkeit ist es bei einer relativen, also nicht absoluten Genauigkeit der Geschwindigkeitsschätzung von z.B. 10%, den Wert für die Fahrzeugquergeschwindigkeit zu skalieren.

Die Drehrate kann zur Bildung der Auslöseentscheidung einem Schwellwertvergleich unterzogen werden, wobei der Schwellwert fest oder in Abhängigkeit von der wenigstens einen Komponente der Fahrzeugschwerpunktsgeschwindigkeit eingestellt wird.

### Zeichnung

Ausführungsbeispiele der Erfindung sind in der Zeichnung dargestellt und werden in der nachfolgenden Beschreibung näher erläutert.

Es zeigen
- Figur 1: einen sogenannten Soil Trip,
- Figur 2: ein Blockschaltbild einer erfindungsgemäßen Vorrichtung,
- Figur 3: ein Blockschaltbild mit einem ersten erfindungsgemäßen Verfahren,
- Figur 4: ein Blockschaltbild mit einem zweiten erfindungsgemäßen Verfahren,
- Figur 5: ein Blockschaltbild mit einem dritten erfindungsgemäßen Verfahren,
- Figur 6: ein Beschleunigungs-Geschwindigkeits-Diagramm zur Bildung der Auslöseentscheidung,
- Figur 7: ein weiteres Beschleunigungs-Geschwindigkeits-Diagramm
- Figur 8: ein drittes Beschleunigungs-Geschwindigkeits-Diagramm UND
- Figur 9: ein viertes Beschleunigungs-Geschwindigkeits-Diagramm.

### Beschreibung

Moderne Systeme zur Sensierung von Überrollereignissen arbeiten mit mikromechanischen Drehratensensoren, die über eine numerische Integration auch die Berechnung des Drehwinkels ermöglichen. Die Kombination von Drehraten- und Drehwinkelinformation erlaubt eine Vorhersage des Überrollens und somit eine Auslöseentscheidung, die robuster und flexibler ist, als eine Auslösung über eine feste Winkelschwelle eines Neigungssensors. Auf Drehratensensoren beruhende Überroll-Sensierungssysteme erlauben somit auch die Auslösung irreversibler Rückhaltemittel wie pyrotechnischer Gurtstraffer und Windowbags zusätzlich zu der ursprünglichen Anwendungen der Überrollsensierung, dem Auslösen eines reversiblen Überrollbügels im Cabriolet. Ein klassischer Überrollvorgang wird dadurch induziert, dass dem Fahrzeug während der Geradeausfahrt durch die Beschaffenheit der Umgebung eine Bewegung in z-Richtung, also in Vertikalrichtung, aufgezwungen wird, die zu einer Drehung des Fahrzeugs führt. Typische Beispiele für solche Situationen sind abschüssige Böschungen neben der Fahrbahn sowie Rampen, die in der Praxis durch seitliche Leitplanken gegeben sind. Bei solchen Manövern sind die auftretenden lateralen Beschleunigungen relativ niedrig und die Insassen geraten erst spät, wenn überhaupt, in eine sogenannte "Out-Of-Position"-Situation, so dass die Auslösung der Insassenschutzsysteme erst zu einem relativ späten Zeitpunkt notwendig ist. Hierbei bedeutet "Out-Of-Position"-Situation, dass sich ein Insasse nicht in der Sitzposition befindet, in der er durch Rückhaltemittel optimal geschützt werden kann.

Anders sieht es aber bei den sogenannten Soil Trip-Überschlägen aus. Diese sind Situationen, in denen das Fahrzeug nach einem Schleudervorgang seitlich wegrutscht und dann auf einen Untergrund mit einem hohen Reibungskoeffizienten gerät, beispielsweise, wie in Figur 1 dargestellt, ein unbefestigter Untergrund neben einer Fahrbahn. Rutscht das Fahrzeug, wie dort dargestellt, nach rechts, so werden die Reifen auf der rechten Seite eine starke Verzögerung erfahren, die dann einen Drehimpuls des Fahrzeugs verursacht. Der entscheidende Unterschied zu den zuvor beschriebenen Überroll-Vorgängen ist, dass die Insassen auf Grund der hohen lateralen Verzögerung des Fahrzeugs sehr früh "Out-Of-Position" geraten werden. Es ist also notwendig, die Insassen zu einem sehr frühen Zeitpunkt durch Aktivierung der geeigneten Schutzeinrichtungen, zum Beispiel Windowbags, vor Verletzungen durch einen Aufprall an die B-Säule oder die Fensterscheibe zu schützen. Eine derartig frühe Auslösung ist mit derzeitigen Systemen nicht möglich, ohne Gefahr zu laufen, in vielen Nicht-Auslösefällen unbeabsichtigt die Rückhaltemittel zu zünden. Die vorliegende Erfindung stellt ein Verfahren vor, um im Falle von Soil Trips einen früheren Auslösezeitpunkt zu ermöglichen.

Um eine solche frühe Auslösung im Falle von Soil Trips zu ermöglichen, verwendet die vorliegende Erfindung zusätzlich zu den Größen Drehrate und Beschleunigung in y- und z-Richtung, eine auf geeignete Weise bestimmte Fahrzeuggeschwindigkeit in y-Richtung, also die Fahrzeugquergeschwindigkeit. Es sind jedoch auch andere Komponenten der Fahrzeugschwerpunktsgeschwindigkeit möglich, die als Näherungswerte für die Fahrzeugquergeschwindigkeit verwendet werden können.

Untersuchungen von Soil Trip-Fahrzeugtests haben gezeigt, dass die Fahrzeugquergeschwindigkeit einen entscheidenden Einfluss auf den maximal erreichten Rollwinkel und somit auf das Überrollverhalten eines Fahrzeugs in Soiltrip-Vorgängen hat. Die Fahrzeugquergeschwindigkeit wird hier mittels Daten aus einem Fahrzeugdynamiksystem, wie beispielsweise ESP, ermittelt. Es sind jedoch auch andere Möglichkeiten gegeben, um die Fahrzeugquergeschwindigkeit zu bestimmen.

Erfindungsgemäß wird die Auslöseentscheidung derart gebildet, dass zusätzlich zur Verknüpfung der Drehrate und der Fahrzeugquerbeschleunigung die Fahrzeugquerbeschleunigung einer Schwellwertentscheidung unterworfen wird, wobei der Schwellwert in Abhängigkeit von wenigstens einer Komponente der Fahrzeugschwerpunktsgeschwindigkeit eingestellt wird. Dafür wird vorzugsweise die Fahrzeugquergeschwindigkeit verwendet.

Die in geeigneter Weise gefilterte Beschleunigung in Fahrzeugquerrichtung a_{y} eignet sich besonders für die Schwellwertentscheidung, da eine am Reifen ansetzende laterale Beschleunigung den Überrollvorgang einleitet. Wie anhand von Fahrzeugversuchen bestätigt wurde, muss bei abnehmender Fahrzeugquergeschwindigkeit v_{y} die Querbeschleunigung a_{y} zunehmen, um ein Fahrzeug zum Überrollen zu bringen. Der Zusammenhang ist dabei normalerweise nicht linear und wird durch die Schwellentscheidung berücksichtigt. Die kritische Querbeschleunigung, d.h. die Querbeschleunigung, die zu einem Überschlag führt, zeigt als Funktion der Fahrzeugquergeschwindigkeit vielmehr einen umso größeren Gradienten, je näher sich die Fahrzeugquergeschwindigkeit der sogenannten "critical sliding velocity (CSV)" von höheren Geschwindigkeiten her nähert. Die CSV ist definiert als die Quergeschwindigkeit des Fahrzeugs, unterhalb derer ein Überschlagen des Fahrzeugs auf Grund grundlegender physikalischer Prinzipien, also der Energiebilanz, unmöglich ist. Die genaue Form der Kennlinie hängt vom Fahrzeugtyp und den Anforderungen an das System ab. Es wird in den folgenden Beispielen aber immer davon ausgegangen, dass die Kennlinie, also der Absolutwert der kritischen Querbeschleunigung als Funktion der Fahrzeugquergeschwindigkeit, für abnehmende Werte von v_{y} monoton zunimmt.

Neben a_{y} eignet sich auch die in geeigneter Weise gefilterte Drehrate um die Fahrzeuglängsachse ω_{X} für die Schwellwertentscheidung, die hier als Verknüpfung verwendet wird. Zwar ist die Verwendung von ω_{X} weniger intuitiv, da es eine laterale Verzögerung ist, die den Soil Trip-Vorgang einleitet. Untersuchungen entsprechender Fahrzeugversuche haben jedoch ergeben, dass sowohl ω_{X} als auch a_{y} bei geeigneter Filterung als Größen für eine Auslöseschwelle geeignet sind.

Geht man zunächst von einer zeitkontinuierlichen nahezu exakten Bestimmung der Fahrzeugquergeschwindigkeit v_{y} aus, so werden nach dem Erfüllen einer Startbedingung für den Algorithmus die sensierten Werte für a_{y}, ω_{X} und v_{y} kontinuierlich, also in jeder Schleife des Algorithmus mit den in Form einer Kennlinie gespeicherten kritischen Werten verglichen. Liegt das Wertepaar Wert (a_{y}, v_{y}) zu einem Zeitpunkt t über dem kritischen Wert der Kennlinie, so ist die Hauptauslösebedingung erfüllt. Zusätzlich muss sichergestellt werden, dass die laterale Beschleunigung auch tatsächlich eine Drehung induziert. Das wird weiter unten besprochen. Neben a_{y} kann auch ω_{X} mit einem in Abhängigkeit von v_{y} eingestellten Schwellwert verglichen werden oder der v_{y}-abhängige Schwellwert kann als Funktion von ω_{X} verändert werden.

Es wird im Folgenden immer davon ausgegangen, dass a_{y} negativ, also eine Verzögerung, ist, und v_{y} sowie die Drehrate ω_{X} positiv ist. Geht man davon aus, dass a_{y} von einem Sensor im Airbagsteuergerät bestimmt wird, so wird sich das Vorzeichen danach richten, ob der Soil Trip durch seitliches Rutschen nach links oder rechts zustande kommt. Desgleichen ist das Vorzeichen von v_{y} abhängig von der Konvention, die bei der Bestimmung von v_{y} verwendet wird. Bei der Umsetzung im Mikrokontroller, also im Prozessor im Airbagsteuergerät, bietet sich das folgende Verfahren an:

Von allen Größen v_{y}, a_{y} und ω_{X} werden die Beträge gebildet. Zusätzlich wird durch einen Vorzeichencheck gewährleistet, dass v_{y}, a_{y} und ω_{X} als Bedingung für einen Überrollvorgang in die selbe Richtung zeigen.

Die laterale Beschleunigung, die zu einem Kippen des Fahrzeugs führt, ist im wesentlichen bestimmt von der Schwerpunktslage und der Spurbreite eines Fahrzeugs und wird rechnerisch erfasst mit dem static stability factor (SSF). Typische Werte liegen für PKW's und SUV's (Sports Utility Vehicle) im Bereich von ca. SSF = 1,0 bis 1,7. Die SSF entspricht der lateralen Beschleunigung in Einheiten von g, die zum Umkippen des Fahrzeugs notwendig ist. Eine Kennlinie for | a_{y} | zu v_{y} wird also als niedrigste Auslöseschwelle immer einen Wert haben, der für das entsprechende Fahrzeug oberhalb des SSF-Wertes in g liegt. Abhängig von dem Untergrund ist es aber auch möglich, dass sich an allen Reifen eine hohe Beschleunigung aufbaut, also nicht nur an den rechten bzw. linken Reifen bei seitlichem Rutschen nach rechts bzw. links, so dass das Fahrzeug zwar seitlich rutscht, aber kein ausreichend großes Drehmoment induziert wird, um das Fahrzeug zum Kippen zu bringen. Verlässt man sich für die Auslöseentscheidung ausschließlich auf das Überschreiten eines Schwellwerts für | a_{y} | als Funktion von v_{y}, so kann dies im ungünstigsten Fall zu einer Auslösung bei starker Fahrzeugquerbeschleunigung ohne signifikanten Aufbau eines Kippwinkels führen. Um Auslösungen in solchen Fällen zu unterdrücken, ist es vorteilhaft, eine zusätzliche Auslösebedingung an das Drehratensignal zu knüpfen. Als mögliche Realisierung der zusätzlichen Berücksichtigung des Drehratensignals bieten sich die folgenden Verfahren an:
a) als zusätzliche Auslösebedingung muss eine Schwelle an die auf geeignete Weise gefilterte Drehrate überschritten werden.
b) als zusätzliche Auslösebedingung muss eine Schwelle an die integrierte Drehrate, also den aufgebauten Winkel überschritten werden, wobei es vorteilhaft ist, den Start der Integration an das Überschreiten eines Schwellwertes an die Drehrate zu knüpfen.
c) des weiteren kann der Start einer Integration einer Drehrate an das Überschreiten eines Schwellwerts der Fahrzeugquerbeschleunigung geknüpft werden. In diesem Fall wird die Drehrate nur dann integriert, wenn die auf geeignete Weise gefilterte Fahrzeugquerbeschleunigung oberhalb eines definierten Wertes liegt. Als zusätzliche Auslösebedingung wird dann gefordert, dass das resultierende Integral, das die Dimension eines Winkels hat, einen Schwellwert überschreiten muss.

Die soeben geschilderten Aufgaben ergeben sich nicht, wenn man eine Auslöseschwelle für ω_{X} als Funktion von v_{y} betrachtet. Allerdings können sich auch bei nicht Soil-Triprelevanten Fahrmanövern, zum Beispiel bei engen und schnellen Kurvenfahrten, unter Umständen sehr hohe Drehraten aufbauen, die dann möglicherweise zu Fehlauslösungen führen könnten. Es ist also vorteilhaft, in diesem Fall zusätzlich eine auf dem Sensorsignal der Fahrzeugquerbeschleunigung beruhende Schwelle einzuführen. Analog zu den zuvor geschilderten zusätzlichen Auslösebedingungen auf Basis des Drehratensignals seien die folgenden Beispiele einer Umsetzung beschrieben:
a) als zusätzliche Auslösebedingung muss eine Schwelle an die auf geeignete Weise gefilterte Fahrzeugquerbeschleunigung überschritten werden.
b) als zusätzliche Auslösebedingung muss eine Schwelle an die integrierte Fahrzeugquerbeschleunigung, also den Geschwindigkeitsabbau, überschritten werden, wobei es vorteilhaft ist, den Start einer Integration an das Überschreiten eines Schwellwerts an die Fahrzeugquerbeschleunigung zu knüpfen.
c) des weiteren kann eine Integration der Fahrzeugquerbeschleunigung an das Überschreiten eines Schwellwerts der Drehrate geknüpft werden: in diesem Fall wird die Fahrzeugquerbeschleunigung nur dann integriert, wenn die auf geeignete Weise gefilterte Drehrate oberhalb eines definierten Wertes liegt. Als zusätzliche Auslösebedingung wird dann gefordert, dass das resultierende Integral, das die Dimension einer Geschwindigkeit hat, einen Schwellwert überschreiten muss.

Es ist also in jedem Fall ein Vorteil, für eine Auslöseentscheidung die Signale eines Drehratensensors und eines Beschleunigungssensors zu verknüpfen. Es wurden bis jetzt Verfahren beschrieben, in denen eine Hauptauslöseentscheidung auf Grund einer Kennlinie für a_{y} und ω_{X} getroffen wurde und dann eine zusätzliche schwächere Auslösebedingung Plausibilisierung auf dem Verhalten von ω_{X} bzw. a_{y} basiert. Natürlich ist auch eine gleichberechtigte Auslöseentscheidung von a_{y} und ω_{X} möglich, d.h., dass sowohl für a_{y}, als auch für ω_{X} Kennlinien definiert werden, deren Auslöseentscheidung auf geeignete Weise verknüpft werden, beispielsweise durch ein einfaches logisches UND. Zusätzlich können ay und ω_{X} auf geeignete Weise bearbeitet (z.B. Filtern und Integrieren) und verknüpft werden.

Figur 2 zeigt als Blockschaltbild die erfindungsgemäße Vorrichtung. Ein Prozessor, ein Mikrokontroller oder ein Mikroprozessor µC, der in einem Steuergerät für Rückhaltemittel angeordnet ist, ist über einen Datenein-/ausgang mit einem Speicher mem verbunden, in dem Schwellwerte und Kennlinienfelder abgelegt sind. Sensordaten kommen von einem Sensor für die Fahrzeugquerbeschleunigung a_{y} und einem Drehratensensor ω_{X}. Alternativ ist es möglich, dass die Drehrate mit Hilfe einer Anzahl von Beschleunigungssensoren bestimmt wird. Die einzelnen Sensoren weisen in der Regel eine eigene Elektronik zur Verstärkung und Digitalisierung der Messwerte auf. Die Werte für die Fahrzeugquergeschwindigkeit v_{y} kommen von einem weiteren Sensor oder werden von einer externen Einheit berechnet, zum Beispiel ESP oder es werden von einer externen Einheit Rohdaten geliefert, aus denen mit einem entsprechenden Algorithmus im Prozessor µC die Fahrzeugquergeschwindigkeit geschätzt wird. Der Prozessor µC ist mit Rückhaltemitteln RS, beispielsweise Airbags, Gurtstraffer bzw. Insassenschutzsystemen wie einem Überrollbügel verbunden. Die Rückhaltemittel RS werden bei einer entsprechenden Entscheidung des im Prozessor µC laufenden Algorithmus ausgelöst, wobei zusätzlich noch eine Innenraumsensierung IS eingesetzt werden kann, um das Auslöseverhalten entsprechend anzupassen. Dazu gehört beispielsweise die Unterdrückung der Auslösung für den Gurtstraffer oder den Windowbag des Beifahrersitzes, wenn dieser nicht besetzt ist. Als Mittel zur Innenraumsensierung können Gewichtssensoren oder bildgebende Sensoren verwendet werden.

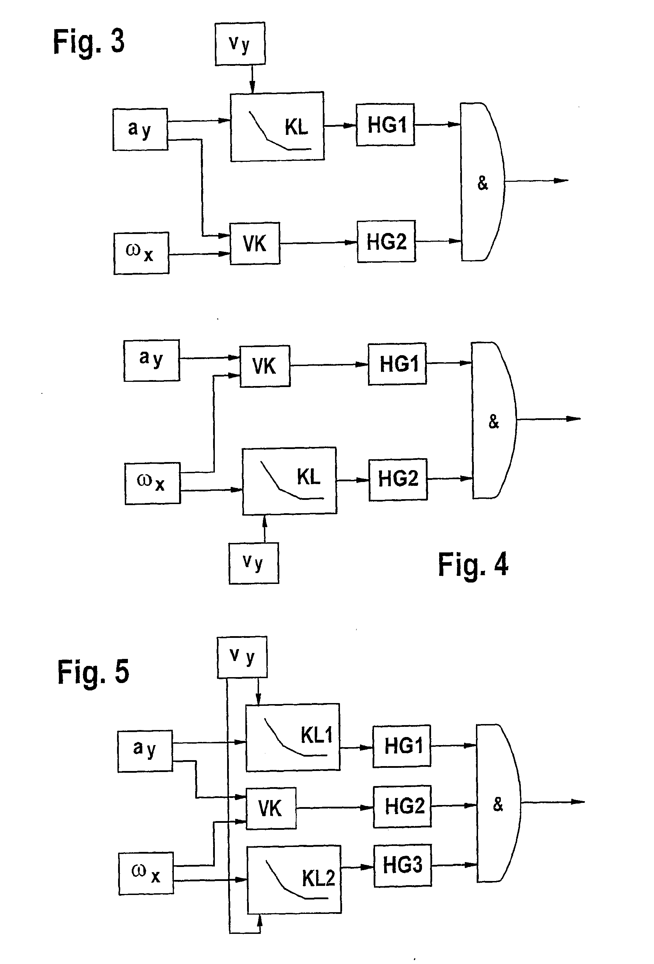

Figur 3 zeigt als Blockdiagramm eine bevorzugte Auslegung des erfindungsgemäßen Verfahrens. Im Hauptpfad oben werden der aus den entsprechenden Sensordaten abgeleitete Wert für die Fahrzeugquerbeschleunigung a_{y} sowie eine Schätzgröße für die Fahrzeugquergeschwindigkeit v_{y} mit einer Kennlinie KL verglichen. Die resultierende Auslöseentscheidung kann durch ein Halteglied HG1 gehalten werden, um die Korrelation mit dem Plausibilitätspfad unten zu optimieren. Im Plausibilitätspfad wird aus a_{y} und dem in geeigneter Weise aufbereiteten Sensorsignal für die Drehrate ω_{X} durch eine geeignete Berechnung (bspw. Filtern und Integrieren) und Verknüpfung VK eine Plausibilisitätsentscheidung getroffen. Dies kann durch ein Halteglied HG2 gehalten werden. Die von den Haltegliedern HG1 und HG2 ausgegebenen Entscheidungen (Ja für eine positive Auslöse- bzw. Plausibilitätsentscheidung) werden in dem Glied & durch ein logisches UND verknüpft und die resultierende Entscheidung (Auslösung Ja/Nein) an das zugeordnete Rückhaltemittel geleitet.

Figur 4 zeigt als ein weiteres Blockdiagramm eine weitere bevorzugte Auslegung des erfindungsgemäßen Verfahrens. Im Hauptpfad unten werden der aus den entsprechenden Sensordaten abgeleitete Wert für die Drehrate ω_{X} sowie eine Schätzgröße für die Fahrzeugquergeschwindigkeit v_{y} mit einer Kennlinie KL verglichen. Die resultierende Auslöseentscheidung kann durch ein Halteglied HG2 gehalten werden, um die Korrelation mit dem Plausibilitätspfad oben zu optimieren. Im Plausibilitätspfad wird aus ω_{X} und dem in geeigneter Weise aufbereiteten Sensorsignal für die Fahrzeugquerbeschleunigung a_{y} durch geeignete Berechnung (bspw. Filtern und Integrieren) und Verknüpfung VK eine Plausibilitätsentscheidung getroffen. Diese kann durch ein Halteglied HG1 gehalten werden. Die von den Haltegliedern HG1 und HG2 ausgegebenen Entscheidungen werden in dem Glied & durch ein logisches UND verknüpft und die resultierende Entscheidung (Auslösung Ja/Nein) an das zugeordnete Rückhaltemittel geleitet.

Figur 5 zeigt als Blockdiagramm eine weitere bevorzugte Auslegung des erfindungsgemäßen Verfahrens mit zwei Hauptpfaden oben und unten. Die Hauptpfade entsprechen den Hauptpfaden in den Figuren 3 und 4. Ebenfalls in Analogie zu den Figuren 3 und 4 kann ein Plausibilitätspfad verwendet werden, der aus ω_{X} und a_{y} durch geeignete Berechnung (bspw. Filtern und Integrieren) und Verknüpfung VK eine Plausibilitätsentscheidung trifft. Die von den Haltegliedern HG1, HG2 und HG3 ausgegebenen Entscheidungen werden in dem Glied UND durch ein logisches UND verknüpft und die resultierende Entscheidung an das zugeordnete Rückhaltemittel geleitet. Anstelle der zwei Kennlinien KL1 und KL2 ist es auch möglich, eine Kennlinie zu spezifizieren, die dann einen kritischen Wert von a_{y} in Abhängigkeit von v_{y} und ω_{X} bzw. einen kritischen Wert von ω_{X} in Abhängigkeit von v_{y} und a_{y} berechnet.

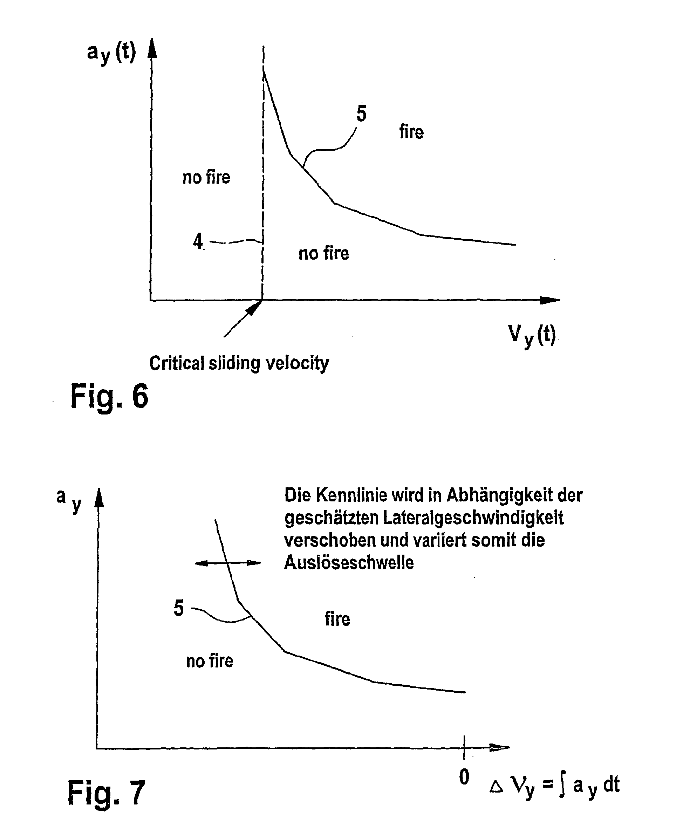

Figur 6 zeigt eine Kennlinie für den Absolutwert der lateralen Beschleunigung a_{y} als Funktion der Fahrzeugquergeschwindigkeit v_{y}, wobei diese zunächst als hinreichend genau bekannt sowie zeitkontinuierlich angenommen wird. Unterhalb der sogenannten Critical Sliding Velocity (CSV) wird eine Auslösung generell verhindert. Ist jedoch v_{y} größer CSV, dann stellt die Kennlinie die Trennung zwischen Auslösung und Nichtauslösung her, es wird davon ausgegangen, dass v_{y} praktisch exakt bekannt ist. Die CSV wird durch die zur Ordinate, also zur Fahrzeugquerbeschleunigungsachse parallele Linie 4 dargestellt. Die Kennlinie 5 stellt die Schwelle für die Fahrzeugquerbeschleunigung a_{y} dar, die überschritten werden muss, um eine Auslöseentscheidung herbei zu führen. Die Bildung einer Schwelle für die Drehrate um die Längsachse ω_{X} erfolgt auf äquivalente Weise.

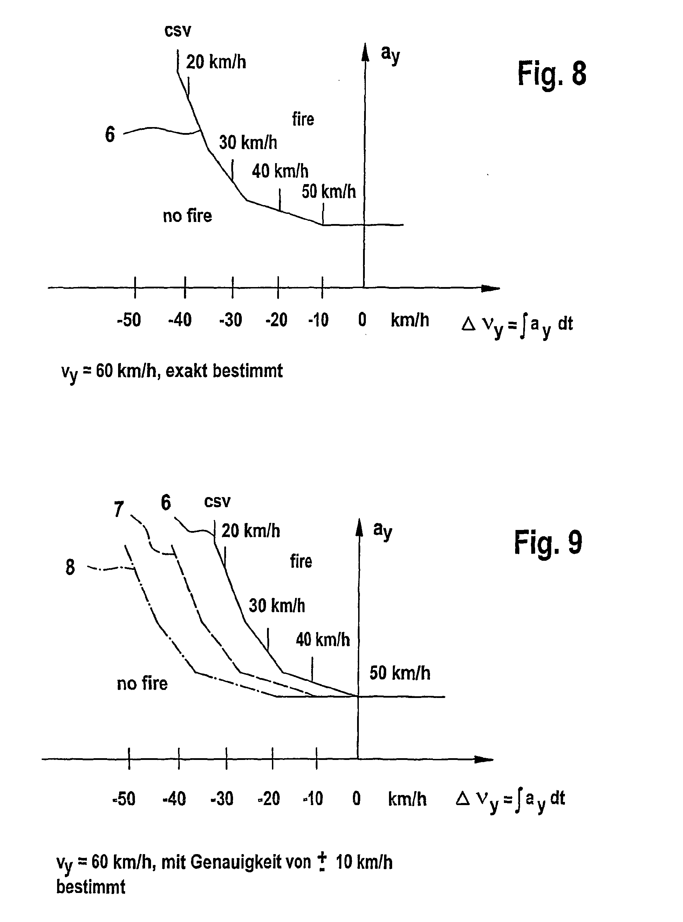

Figur 7 zeigt den allgemeineren Fall einer nur näherungsweise und/oder nicht zetkontinuierlich bestimmten lateralen Geschwindigkeit. Hier werden in einem Beschleunigungs-Geschwindigkeits-Diagramm geeignete Kennlinien für a_{y} (bzw. ω_{X} auf äquivalente Weise) als Funktion des lateralen Geschwindigkeitsabbaus Δ v_{y} und nicht v_{y} verwendet. Δ v_{y} wird aus dem Integral der im Fahrzeug gemessenen Fahrzeugquerbeschleunigung a_{y} durch Integration bestimmt. Dies ist vorteilhaft, um bei einer nicht zeitkontinuierlichen Schätzung der lateralen Fahrzeuggeschwindigkeit zwischen zwei Schätzungen die jeweilige aktuelle Abweichung des Schätzwerts zu kompensieren. Die Integration kann gegebenenfalls um Effekte der Erdbeschleunigung bei Verkippung des Fahrzeug-Koordinatensystems gegenüber dem erdfesten Koordinatensystem korrigiert werden. Um die Abhängigkeit Auslöseentscheidung von der absoluten Fahrzeugquergeschwindigkeit v_{y} zu berücksichtigen, werden entweder mehrere Kennlinien für verschiedene Werte von v_{y} gespeichert und zwischen den Kennlinien extrapoliert oder eine Kennlinie wird in Abhängigkeit des Schätzwertes von v_{y} verschoben. In Figur 7 wird durch den horizontalen Doppelpfeil angedeutet, dass in Abhängigkeit von der Lateralgeschwindigkeit diese Kennlinie verschoben wird. Eine Möglichkeit für das Verschieben der Kennlinie ist in Figur 8 gezeigt:

Für ein Fahrzeug wird aus theoretischen Berechnungen oder aus geeigneten Versuchen die CSV ermittelt. Unterhalb dieser Fahrzeugquergeschwindigkeit sperrt der Algorithmus die Auslösung. Die Stützstellen der Kennlinie sind Wertepaare (v_{y}, | a_{y} |), wobei der niedrigste Wert von v_{y} normalerweise gleich der CSV sein wird. In Figur 8 sind exemplarisch Geschwindigkeitswerte angegeben. Oberhalb einer Geschwindigkeit v_{y max} ist die Auslöseschwelle konstant. Hier ist v_{y max} gleich 50 km/h. Die Kennlinie wird so verschoben, dass zum Zeitpunkt *t*₀ der Geschwindigkeitsschätzung das Wertepaar (v_{y}, |a_{y}|) der Kennlinie mit dem Nullpunkt der Δ v_{y} -Achse übereinstimmt. D.h. also, die Auslöseschwelle zum Zeitpunkt *t*₀ ergibt sich aus dem Wertepaar (v_{y}, | a_{y} |). Die Verschiebung der Kennlinie lässt sich in einem Mikrokontroller am einfachsten über die Addition eines Offsets auf Δ v_{y} realisieren. Der Anschauung halber wird aber im Folgenden von einer Verschiebung der Kennlinie gesprochen. Figur 8 zeigt den Ansatz einer exakt bestimmten Geschwindigkeit. Das Auslöseverhalten geht in diesem Fall in den in Figur 6 gezeigten Fall einer Kennlinien | a_{y} | gegenüber v_{y} über. Im Allgemeinen wird jedoch a_{y} mit einer höheren Rate bestimmt, als v_{y} , es liegt also keine zeitkontinuierliche Messung von v_{y} vor und für die Zeit zwischen zwei Schätzungen von v_{y} bleibt die Kennlinie konstant, während Δv_{y} kontinuierlich berechnet wird und der gemessene Wert für a_{y} mit dem zugeordneten Schwellwert verglichen wird. Der Zeitpunkt t₀, der Schätzung von v_{y} , bestimmt den Startpunkt der Integration. Sobald ein neuer Wert von v_{y} zur Verfügung steht, wird die Kennlinie entsprechend verschoben und Δ v_{y} wieder auf Null zurück gesetzt. D.h. t₀ wird neu festgesetzt.

Figur 9 zeigt eine weitere Möglichkeit für die Verschiebung der Kennlinie und zwar bei nicht exakt bekannter Fahrzeugquergeschwindigkeit. In diesem Beispiel wird die Fahrzeugquergeschwindigkeit mit einer Genauigkeit von ± 10 km/h bestimmt. Die Strategie ist dabei die einer konservativen Auslösung, d.h. mit einer ungenauen Geschwindigkeitsschätzung darf die Auslösung nur verzögert werden, nicht aber eine Fehlauslösung bzw. verfrühte Auslösung eintreten. Ist die geschätzte Geschwindigkeit also zum Beispiel 60 km/h mit einer Genauigkeit von ± 10 km/h, so liegt die wahre Geschwindigkeit zwischen 50 und 70 km/h. Die konservativste Einstellung ist die für 50 km/h und entsprechend wird die Kennlinie für 50 km/h auf Δv_{y} = 0 geschoben. Die Kennlinien für eine exakte Geschwindigkeit von 60 km/h (gestrichelt) und 70 km/h (gepunktet) sind ebenfalls in Figur 9 gezeigt. Es wird deutlich, dass die Einstellung für 50 km/h die konservativste ist, d.h. eine Auslösung findet für gleiche Werte vorn Δv_{y} bei höheren Werten vom | a_{y} | statt.

Von den weiteren Möglichkeiten, die Kennlinie zu variieren, seien hier noch drei Möglichkeiten aufgeführt:
a) wird neben der Fahrzeugquergeschwindigkeit auch deren Genauigkeit, zum Beispiel in Form eines oberen und unteren Fehlerintervalls geschätzt, so kann das oben beschriebene Verfahren dahingehend abgewandelt werden, dass die geschätzte Quergeschwindigkeit bei einer neuen Schätzung um die jeweils aktuelle Genauigkeit verringert wird, also nicht um einen festen Wert, und die Kennlinie um den reduzierenden Wert verschoben wird. Dies hat zur Folge, dass die Fahrzeugquergeschwindigkeit nicht überschätzt werden kann und somit eine exakte Bestimmung der Fahrzeugquergeschwindigkeit nicht zu einer verfrühten oder ungewollten Auslösung führen kann.
b) der geschätzte Wert von v_{y} (t) kann an Stelle der Subtraktion einer Größe auch skaliert werden, z.B. v_{y} *(t) = CSV + x (v_{y}(t) - CSV) mit 0 < x ≤ 1; v_{y} * ist dann der Geschwindigkeitswert der Kennlinie, der auf Δ v_{y} = 0 geschoben wird. Für den Grenzwert x = 0 ist die Auslösung völlig unterdrückt. Für den Fall x = 1 ist v_{y} * = v_{y} , d.h. wir gehen wieder zu dem Fall einer exakten Bestimmung von v_{y} über.
c) eine weitere Möglichkeit ist die Verbindung der Fälle a) und b).

## Patentansprüche

1. Verfahren zur Bildung einer Auslöseentscheidung, wobei die erste Auslöseentscheidung in Abhängigkeit von Fahrdynamikdaten (v_{y} , a_{y} , ω_{X}) gebildet wird, wobei als die Fahrdynamikdaten zumindest eine Fahrzeugquerbeschleunigung (a_{y} ) und eine Drehrate (ω_{X}) um die Fahrzeuglängsachse miteinander verknüpft werden, um eine zweite Auslöseentscheidung zu bilden, **dadurch gekennzeichnet, dass** die Fahrzeugquerbeschleunigung (a_{y}) und/oder die Drehrate (ω_{X}) zusätzlich einer jeweiligen Schwellwertentscheidung zur Bildung einer dritten Auslöseentscheidung unterzogen wird, wobei der jeweilige Schwellwert wenigstens in Abhängigkeit von der Fahrzeugquergeschwindigkeit (v_{y}) eingestellt wird, dass die erste Auslöseentscheidung durch eine logische Und-Verknüpfung der ersten und zweiten Auslöseentscheidung gebildet wird.

2. Verfahren nach Anspruch 1, **dadurch gekennzeichnet, dass** die Verknüpfung derart durchgeführt wird, dass die Fahrzeugquerbeschleunigung (a_{y} ) und/oder die Drehrate (ω_{X}) mit Wertepaaren zur Bildung der zweiten Auslöseentscheidung verglichen werden, die in Abhängigkeit von der der Fahrzeugquergeschwindigkeit (v_{y}) gebildet werden.

3. Verfahren nach Anspruch 2, **dadurch gekennzeichnet, dass** wenigstens ein Set von Wertepaaren für die Fahrzeugquergeschwindigkeit abgespeichert wird, wobei ein neues Set von Wertepaaren durch Extrapolation aus dem wenigstens einen Set gewonnen wird.

4. Verfahren nach einem der vorherigen Ansprüche, **dadurch gekennzeichnet, dass** zusätzlich die Fahrzeugquergeschwindigkeit (v_{y}) mit einer vorgegebenen Schwelle verglichen wird, die abhängig von einem verwendeten Fahrzeugtyp ist, wobei bei Unterschreiten dieser Schwelle keine Auslösung möglich ist.

5. Verfahren nach einem der Ansprüche 2 bis 4, **dadurch gekennzeichnet, dass** das wenigstens eine Set in Abhängigkeit von einer Genauigkeit der Geschwindigkeitsschätzung für die Fahrzeugquergeschwindigkeit beeinflusst wird.

6. Verfahren nach einem der vorhergehenden Ansprüche, **dadurch gekennzeichnet, dass** der Schwellwert in Abhängigkeit von der Drehrate (ω_{X}) variiert wird.

## Claims

1. Method for generating a firing decision, wherein the first firing decision is generated as a function of vehicle dynamics data (v_{y}, a_{y}, ωₓ), wherein at least one lateral acceleration (a_{y}) of the vehicle and one rotational speed (ωₓ) about the longitudinal axis of the vehicle are logically combined with one another as the vehicle dynamics data, in order to generate a second firing decision, **characterized in that** the lateral acceleration (a_{y}) of the vehicle and/or the rotational speed (ωₓ) are additionally subjected to a respective threshold value decision in order to generate a third firing decision, wherein the respective threshold value is set at least as a function of the lateral velocity (v_{y}) of the vehicle, and **in that** the first firing decision is generated by means of a logic AND combination of the first and second firing decisions.

2. Method according to Claim 1, **characterized in that** the logic combination is carried out in such a way that the lateral acceleration (a_{y}) of the vehicle and/or the rotational speed (ωₓ) are compared with value pairs in order to generate the second firing decision, which value pairs are generated as a function of the lateral velocity (v_{y}) of the vehicle.

3. Method according to Claim 2, **characterized in that** at least one set of value pairs for the lateral velocity of the vehicle is stored, wherein a new set of value pairs is acquired by extrapolation from the at least one set.

4. Method according to one of the preceding claims, **characterized in that** in addition the lateral velocity (v_{y}) of the vehicle is compared with a predefined threshold which is dependent on a type of vehicle which is being used, wherein firing is not possible if said lateral velocity (v_{y}) of the vehicle drops below this threshold.

5. Method according to one of Claims 2 to 4, **characterized in that** the at least one set is influenced as a function of a precision level of the estimation of the velocity for the lateral velocity of the vehicle.

6. Method according to one of the preceding claims, **characterized in that** the threshold value is varied as a function of the rotational speed (ωₓ).

## Revendications

1. Procédé pour former une décision de déclenchement selon lequel,
on forme la première décision de déclenchement en fonction de données de la dynamique de roulage (v_{y}, a_{y}, ωₓ),
les données de la dynamique de roulage comprenant au moins une accélération transversale du véhicule (a_{y}) et une vitesse de rotation (ωₓ) autour de l'axe longitudinal du véhicule, données qui sont combinées, pour former une seconde décision de déclenchement,
**caractérisé en ce que**
l'accélération transversale du véhicule (a_{y}) et/ou la vitesse de rotation (ωₓ) sont en outre soumises à une décision avec valeur de seuil pour former une troisième décision de déclenchement,
la valeur de seuil respective étant réglée au moins en fonction de la vitesse transversale du véhicule (v_{y}), et
la première décision de déclenchement est formée par une combinaison logique ET de la première et de la seconde décision de déclenchement.

2. Procédé selon la revendication 1,
**caractérisé en ce qu'**
on effectue la combinaison de façon que l'accélération transversale du véhicule (a_{y}) et/ou la vitesse de rotation (ωₓ) soient comparées à des paires de valeurs pour former la seconde décision de déclenchement qui est formée en fonction de la vitesse transversale du véhicule (v_{y}).

3. Procédé selon la revendication 2,
**caractérisé en ce qu'**
on mémorise au moins un jeu de paires de valeurs de la vitesse transversale du véhicule et on récupère un nouveau jeu de paires de valeurs par extrapolation à partir d'au moins un jeu.

4. Procédé selon les revendications précédentes,
**caractérisé en ce qu'**
en plus on compare la vitesse transversale du véhicule (v_{y}) à un seuil prédéfini qui dépend d'un type de véhicule utilisé, et en cas de dépassement vers le bas du seuil, aucun déclenchement n'est possible.

5. Procédé selon les revendications 2 à 4,
**caractérisé en ce qu'**
on influence au moins un jeu de valeurs en fonction de la précision de l'évaluation de la vitesse utilisée pour la vitesse transversale du véhicule.

6. Procédé selon les revendications précédentes,
**caractérisé en ce qu'**
on varie la valeur du seuil en fonction de la vitesse de rotation(ωₓ).
